# FASCICULE DE BREVET EUROPEEN

(11) **EP 1 489 402 B1**
(45) Date de publication et mention de la délivrance du brevet: **17.02.2016**
(21) Numéro de dépôt: 04291439.0
(22) Date de dépôt: 09.06.2004
(51) Int. Cl.: G01N 15/02

(54) **Procédé pour éclairer des particules en vue de la formation de leurs images**
Verfahren zur Beleuchtung von Partikeln zur Erzeugung ihrer Bilder
Method for illuminating particles for generating their images

(30) Priorité: 20.06.2003 FR 0307463
(43) Date de publication de la demande: 22.12.2004
(73) Titulaire: AIRBUS OPERATIONS (SAS), 31060 Toulouse (FR)
(72) Inventeur: Roques, Sandrine, 31170 Tournefeuille (FR); Lopez, Christian, 31530 Le Castera (FR)
(74) Mandataire: Gevers & Orès

(56) Documents cités:
- EP-A- 1 183 518
- WO-A-03/062798
- WO-A1-01/41264
- US-B1- 6 301 271
- US-B1- 6 567 605
- PATENT ABSTRACTS OF JAPAN vol. 013, no. 057 (P-825), 9 février 1989 (1989-02-09) & JP 63 247645 A (TOSHIBA CORP), 14 octobre 1988 (1988-10-14)

## Description

La présente invention concerne un procédé pour éclairer des particules en vue de la formation de leurs images. Quoique non exclusivement, le procédé de la présente invention est particulièrement adapté à la granulométrie de particules de toutes sortes et, en particulier, des gouttelettes d'eau.

On connaît déjà, par exemple par les documents EP-1 183 518 et US-2002/0159060, un procédé de ce type, selon lequel on injecte un faisceau de lumière cohérente, de préférence pulsé, dans une fibre optique, à travers une extrémité de celle-ci, et on éclaire lesdites particules par les impulsions du faisceau lumineux sortant de l'autre extrémité de ladite fibre.

Pour la mise en oeuvre d'un tel procédé, on choisit une fibre optique monomode, en vue d'empêcher l'apparition de bruit parasite (tavelures) dans lesdites images.

Cependant, pour obtenir des images nettes contrastées desdites particules, l'énergie injectée à chaque impulsion du faisceau de lumière cohérente doit être suffisamment élevée pour permettre un éclairage desdites particules suffisant à la formation de leurs images. Dans un tel cas où l'énergie lumineuse injectée est importante, malgré l'utilisation d'une fibre optique monomode, les images desdites particules présentent un bruit de fond parasite et un moirage nuisant à leur netteté.

Par ailleurs, on connaît :
- par le document JP-63247645, un procédé pour stimuler un effet RAMAN afin d'obtenir une amplification lumineuse et de changer la longueur d'onde d'un faisceau laser injecté dans une fibre optique ; et
- par le document US-6 301 271, un système de conversion de fréquences utilisant un effet RAMAN.

La présente invention a pour objet de remédier aux inconvénients précités.

A cette fin, selon l'invention, le procédé pour éclairer une particule en vue de la formation de son image, procédé selon lequel on injecte un faisceau de lumière cohérente dans le coeur d'une fibre optique monomode, à une extrémité de celle-ci, et on éclaire ladite particule par le faisceau lumineux sortant dudit coeur, à l'autre extrémité de ladite fibre optique monomode, est remarquable en ce que la puissance de crête dudit faisceau de lumière cohérente injecté est choisie pour que le spectre dudit faisceau lumineux sortant comporte, à côté de la longueur d'onde dudit faisceau de lumière cohérente injecté, des raies de longueurs d'onde décalées engendrées par conversion RAMAN dans la matière dudit coeur.

En effet, la demanderesse a trouvé que, de façon étonnante et inattendue, et en prenant le contre-pied de l'homme du métier qui par réflexe technique tend à préserver par tous les moyens la monofréquence du faisceau de lumière d'illumination, il était possible d'éliminer, desdites images, le bruit de fond et le moirage en apportant suffisamment d'énergie à l'entrée de la fibre optique pour engendrer la conversion RAMAN du faisceau lumineux lors de son transport dans ladite fibre optique monomode.

Une explication a posteriori de cet effet bénéfique des raies RAMAN pourrait être la suivante :
- des impuretés sont présentes sur les optiques du dispositif d'illumination des particules et de l'appareil de prise de vue de ces dernières, de sorte que, lorsque ces impuretés sont éclairées par un faisceau laser cohérent de forte énergie, elles provoquent des phénomènes de diffraction avec apparition d'interférences, ce qui engendre un bruit de fond. De plus, les réflexions sur les diverses optiques provoquent des franges d'interférences, qui se traduisent par un moirage des images ;
- en revanche, lorsque le faisceau d'illumination n'est plus monofréquence, mais, au contraire, comporte des raies RAMAN, les différents signaux de diffraction desdites impuretés provenant des différentes longueurs d'onde RAMAN se mélangent en se contrant, de sorte que la netteté des particules est améliorée.

Bien entendu, l'explication ci-dessus n'est qu'une hypothèse, dont l'invalidation éventuelle ne saurait être préjudiciable à la présente invention.

Comme on le sait, la première raie RAMAN est engendrée par l'action dudit faisceau de lumière cohérente sur la matière du coeur de la fibre optique et présente une longueur d'onde supérieure à celle dudit faisceau. De même, la deuxième raie RAMAN est engendrée par l'action de la première raie RAMAN sur la matière du coeur de la fibre optique et présente une longueur d'onde supérieure à celle de ladite première raie RAMAN, etc ..., une nième raie RAMAN étant engendrée par l'action de (n-1)ème raie RAMAN sur la matière dudit coeur et présentant une longueur d'onde supérieure à celle de ladite (n-1)ème raie RAMAN (n étant un nombre entier).

Ainsi, la longueur d'onde des raies RAMAN augmente progressivement. Afin d'éviter la gêne due à l'augmentation des taches d'Airy sur les images desdites particules et, donc, de nuire à la qualité desdites images, il est avantageux de faire en sorte que, dans ledit faisceau lumineux sortant de ladite fibre optique monomode, il n'y ait aucune raie RAMAN appartenant à l'infrarouge ou proche de l'infrarouge. Ceci peut être obtenu en choisissant de façon adéquate la longueur de ladite fibre optique monomode.

Pour la mise en oeuvre du procédé conforme à la présente invention, on utilise avantageusement des fibres optiques monomodes connues à longueurs d'ondes spécifiques, c'est-à-dire des fibres optiques monomodes dans lesquelles le diamètre du coeur est adapté à la longueur d'onde du faisceau à transmettre par la fibre optique et est une fonction croissante de ladite longueur d'onde. Par exemple, une telle fibre optique monomode adaptée à une longueur d'onde de 515 nm peut présenter un diamètre de coeur de 3 µm, alors qu'une autre adaptée à une longueur d'onde de 780 nm peut présenter un diamètre de coeur de 4,9 µm.

Avec de telles fibres optiques monomodes à longueurs d'ondes spécifiques, on prévoit, selon une autre particularité de la présente invention, que, ledit faisceau de lumière cohérente injecté ayant une longueur d'onde égale à λ1, on l'injecte dans le coeur d'une fibre optique monomode à longueur d'onde spécifique adaptée à une longueur d'onde λ2 supérieure à λ1.

Ainsi, la surface d'injection du faisceau de lumière cohérente dans ledit coeur peut être augmentée et la densité surfacique de puissance injectée à l'entrée de la fibre optique peut être suffisamment élevée, sans saturer cette dernière.

Bien entendu, il faut veiller à ce que, en mettant en oeuvre un diamètre de coeur plus grand que celui adapté à la longueur d'onde λ1, la propagation à l'intérieur de la fibre reste monomode. Ceci est généralement satisfait lorsque le rapport λ2/λ1 est, au moins approximativement, égal à 1,2.

Dans un mode de mise en oeuvre particulier du procédé conforme à l'invention, λ1 était égale à 532 nm et λ2 à 630 nm.
Les figures du dessin annexé feront bien comprendre comment l'invention peut être réalisée. Sur ces figures, des références identiques désignent des éléments semblables.
La figure 1 montre schématiquement un appareil de granulométrie mettant en oeuvre le procédé conforme à la présente invention.
La figure 2 est une section schématique très agrandie de la fibre optique utilisée dans l'appareil de la figure 1.
La figure 3 illustre schématiquement l'introduction du faisceau de lumière cohérente dans le coeur de ladite fibre optique.

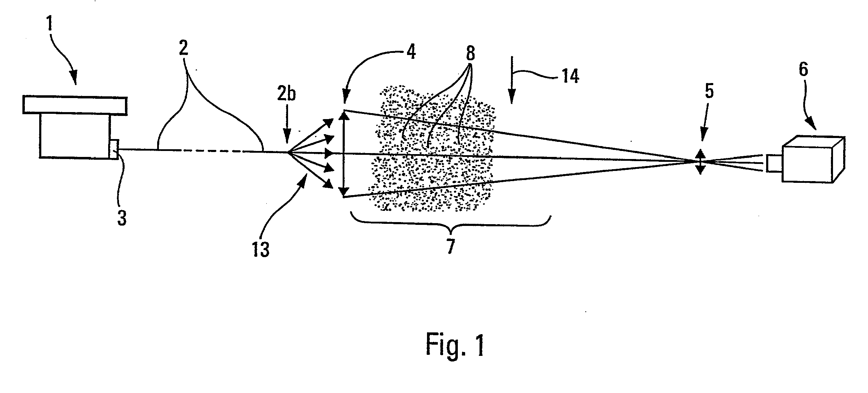

L'appareil illustré schématiquement sur la figure 1 comporte un laser pulsé 1, couplé à une extrémité 2a d'une fibre optique 2 au moyen d'un coupleur 3. L'autre extrémité 2b de la fibre optique 2 illumine une optique de champ 4 qui focalise le faisceau lumineux émergeant de la fibre optique 2 sur l'optique d'objectif 5 d'une caméra de prise de vue 6, en définissant une zone de mesure 7 dans laquelle se trouvent des particules 8.

Lesdites particules 8 peuvent être stationnaires ou traverser, éventuellement à grande vitesse, la zone de mesure 7, comme cela est symbolisé sur la figure 1 par la flèche 14.

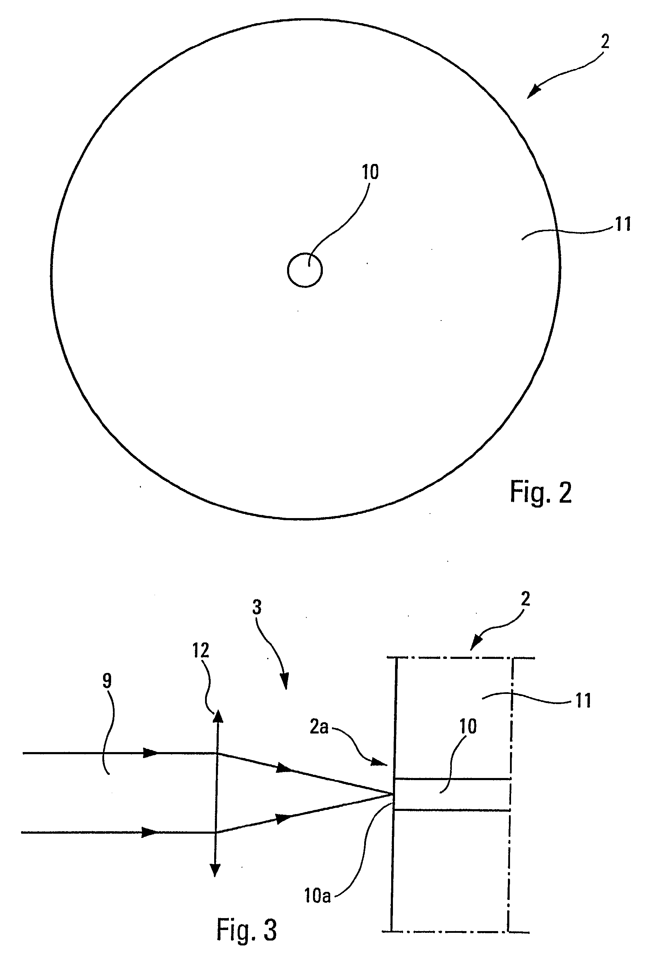

Le laser 1 est par exemple du type YAG (grenat d'yttrium - aluminium) doublé émettant, à la longueur d'onde λ1 par exemple égale à 532 nm, un faisceau pulsé 9 (voir la figure 3).

La fibre optique 2 est de type monomode à longueur d'onde spécifique. Elle comporte (voir la figure 2) un coeur 10, par exemple en silice très pure, entouré par une gaine 11, par exemple en silice de moindre qualité. Le diamètre du coeur 10 est compris entre quelques microns et au plus une dizaine de microns, alors que le diamètre de la gaine 11 dépasse les cent microns. De plus, l'indice de réfraction de la gaine 11 est plus faible que celui du coeur 10.

De façon générale, la fibre optique monomode 2 est adaptée à la transmission monomode d'un faisceau laser 9 de longueur d'onde spécifique déterminée, avec cependant quelques tolérances : ainsi, dans l'exemple donné ci-dessus d'un faisceau laser 9 à 532 nm, on pourrait utiliser une fibre optique monomode 2 existant dans le commerce et spécialement construite pour la transmission monomode d'un faisceau laser de longueur d'onde égale à 514 nm.

Dans le coupleur 3, le faisceau cohérent puisé 9 est focalisé par une optique 12 sur la face d'extrémité 10a du coeur 10, correspondant à l'extrémité 2a de la fibre 2 (voir la figure 3).

A l'extrémité opposée 2b de la fibre optique monomode 2 émerge, du coeur 10, le faisceau lumineux 13, éclairant les particules 8.

Il est indispensable que le laser 1 communique à chaque impulsion du faisceau laser 9 une énergie élevée, afin que chaque impulsion du faisceau lumineux 13 éclaire suffisamment lesdites particules 8 pour que la caméra 6 puisse en faire des images satisfaisantes.

A cette fin, la puissance de crête du faisceau laser 9 est choisie suffisamment élevée pour que, d'une part, les particules 8 soient correctement éclairées en vue de la formation de leur image par la caméra 6 et, d'autre part, le spectre du faisceau lumineux d'éclairement 13 comporte, en plus de la longueur d'onde du faisceau laser 9, des raies de longueurs d'onde décalées engendrées par conversion RAMAN dans le coeur 10, pour éliminer, conformément à l'invention, le bruit de fond et le moirage des images.

Par réduction de la longueur de la fibre optique monomode 2, on élimine les raies RAMAN de l'infrarouge et du proche infrarouge, inutiles et nuisibles.

Par ailleurs, pour faciliter l'introduction, sans saturation, de l'énergie élevée du faisceau laser 9 dans l'extrémité 10a du coeur 10, la fibre monomode 2 à longueur d'onde spécifique est adaptée à une longueur d'onde λ2 supérieure à la longueur d'onde λ1 du faisceau laser. Ainsi, le diamètre du coeur 10 est plus grand que si la fibre monomode 2 était strictement adaptée à la longueur d'onde λ1.

Dans l'exemple précédent où λ1 est égale à 532 nm, λ2 peut être choisie égale à 630 nm, de sorte que le rapport λ2/λ1 est voisin de 1,2.

## Revendications

1. Procédé pour éclairer une particule (8) en vue de la formation de son image, procédé selon lequel on injecte un faisceau de lumière cohérente (9) dans le coeur (10) d'une fibre optique monomode (2), à une extrémité (2a) de celle-ci, et on éclaire ladite particule (8) par le faisceau lumineux (13) sortant dudit coeur (10), à l'autre extrémité (2b) de ladite fibre optique monomode (2),
**caractérisé en ce que** la puissance de crête dudit faisceau de lumière cohérente injecté (9) est choisie pour que le spectre dudit faisceau lumineux sortant (13) comporte, à côté de la longueur d'onde dudit faisceau de lumière cohérente injecté (9), des raies de longueurs d'onde décalées engendrées par conversion RAMAN dans la matière dudit coeur (10).

2. Procédé selon la revendication 1,
**caractérisé en ce qu'**on élimine, dudit spectre, les raies RAMAN dont la longueur d'onde fait partie du domaine infrarouge et celles dont la longueur d'onde est proche de ce domaine.

3. Procédé selon la revendication 2,
**caractérisé en ce que** l'élimination desdites raies RAMAN correspondant à l'infrarouge ou proches de l'infrarouge se fait par ajustement de la longueur de ladite fibre optique monomode (2).

4. Procédé selon l'une des revendications 1 à 3,
**caractérisé en ce que** ledit faisceau de lumière cohérente (9) ayant une longueur d'onde égale à λ1, on l'injecte dans le coeur (10) d'une fibre optique monomode à longueur d'onde spécifique (2) adaptée à une longueur d'onde λ2 supérieure à λ1 et **en ce que** le rapport λ2/λ1 est, au moins approximativement, égal à 1,2.

5. Procédé selon la revendication 4, **caractérisé en ce que** λ1 est égale à 532 nm et λ2 à 630 nm.

## Patentansprüche

1. Verfahren zum Beleuchten eines Teilchens (8) hinsichtlich der Bildung seines Bildes, wobei gemäß dem Verfahren ein kohärenter Lichtstrahl (9) in den Kern (10) einer optischen Monomode-Faser (2) an deren einem Ende (2a) injiziert wird, und wobei das Teilchen (8) durch den Lichtstrahl (13) beleuchtet wird, der den Kern (10) der optischen Monomode-Faser (2) am anderen Ende (2b) verlässt, **dadurch gekennzeichnet, dass** die Spitzenleistung des injizierten kohärenten Lichtstrahls (9) so gewählt ist, dass das Spektrum des austretenden Lichtstrahls (13) neben der Wellenlänge des injizierten, kohärenten Lichtstrahls (9) Strahlen mit verschobenen Wellenlängen aufweist, die durch Raman-Umwandlung in dem Material des Kerns (10) erzeugt wurden.

2. Verfahren nach Anspruch 1, **dadurch gekennzeichnet, dass** aus dem Spektrum die Raman-Strahlen, deren Wellenlänge in dem Infrarotbereich ist, und solche, deren Wellenlänge in der Nähe von diesem Bereich ist, eliminiert werden.

3. Verfahren nach Anspruch 2, **dadurch gekennzeichnet, dass** das Entfernen der Raman-Strahlen, die dem Infrarot oder der Nähe des Infrarots entsprechen, durch Anpassen der Länge der optischen Monomode-Faser (2) durchgeführt wird.

4. Verfahren nach einem der Ansprüche 1 bis 3, **dadurch gekennzeichnet, dass** der kohärente Lichtstrahl (9) eine Wellenlänge hat, die gleich λ1 ist, wobei in den Kern (10) einer optischen Monomode-Faser mit einer spezifischen Wellenlänge (2) injiziert wird, die auf eine Wellenlänge λ2 eingestellt ist, die größer als λ1 ist, und dass das Verhältnis λ2/ λ1 mindestens ungefähr gleich 1,2 ist.

5. Verfahren nach Anspruch 4, **dadurch gekennzeichnet, dass** λ1 gleich 532 nm und λ2 630 nm ist.

## Claims

1. A method for illuminating particles (8) for the purpose of forming their images, in which method a coherent light beam (9) is injected into the core (10) of a monomode optical fiber (2), at one end (2a) of said fiber, and said particles (8) are illuminated by the light beam (13) emanating from said core (10) at the other end (2b) of said monomode optical fiber (2), **characterized in that** the peak power of said injected coherent light beam (9) is chosen so that the spectrum of said emanating light beam (13) has, alongside the wavelength of said injected coherent light beam (9), lines of shifted wavelengths generated by Raman conversion in the material of said core (10).

2. The method as claimed in claim 1,
**characterized in that** the Raman lines whose wavelength forms part of the infrared range and those whose wavelength is close to this range are removed from said spectrum.

3. The method as claimed in claim 2,
**characterized in that** said Raman lines corresponding to the infrared or close to the infrared are removed by adjusting the length of said monomode optical fiber (2).

4. The method as claimed in one of claims 1 to 3,
**characterized in that** said coherent light beam (9), having a wavelength of λ₁, is injected into the core (10) of a monomode optical fiber having a specific wavelength (2) matched to a wavelength λ₂ of greater than λ₁ and **in that** the λ₂/λ₁ ratio is at least approximately equal to 1.2.

5. The method as claimed in claim 4,
**characterized in that** λ₁ is equal to 532 nm and λ₂ is equal to 630 nm.
